# EUROPÄISCHE PATENTANMELDUNG

(11) **EP 3 793 064 A1**
(43) Veröffentlichungstag der Anmeldung: **17.03.2021**
(21) Anmeldenummer: 20190676.5
(22) Anmeldetag: 12.08.2020
(51) Int. Cl.: H02K 1/27, H02K 1/28

(54) **ROTORBLECH FÜR EINEN ROTOR EINES ELEKTROMOTORS, ROTOR FÜR EINEN ELEKTROMOTOR UND ELEKTROMOTOR**

(30) Priorität: 13.09.2019 DE 102019124710
(71) Anmelder: Metabowerke GmbH, 72622 Nürtingen (DE)
(72) Erfinder: Flöte, Enrico, 70599 Stuttgart (DE)
(74) Vertreter: Schmid, Wolfgang

(57) **Zusammenfassung**

Die Erfindung betrifft ein Rotorblech (7) für einen Rotor (3) eines Elektromotors (1), mit wenigstens zwei Magnettaschen (9) zur Aufnahme eines jeweiligen Magneten (10). Die Magnettaschen (9) weisen jeweils eine im Wesentlichen senkrecht zu einer Symmetrieachse (11) des Rotorblechs (7) verlaufende Quererstreckung (x) und eine in Richtung der Symmetrieachse (11) verlaufende Höhenerstreckung (y) auf. Die Magnettaschen (9) weisen jeweilige ihre Quererstreckung (x) beiderseits vergrößernde Ausnehmungen (12) und jeweilige in die Ausnehmungen (12) ragende, zur beiderseitigen Anlage des Magneten (10) dienende Anschlagelemente (13) auf. Die Anschlagelemente (13) sind jeweils an den dem äußeren Umfang des Rotorblechs (7) zugewandten Seiten der Ausnehmungen (12) angeordnet. Die Magnettaschen (9) weisen an ihren dem äußeren Umfang des Rotorblechs (7) abgewandten Seiten jeweilige an die Ausnehmungen (12) angrenzende, die Fläche der Magnettaschen (9) vergrößernde Aussparungen (14) auf.

## Beschreibung

Die Erfindung betrifft ein Rotorblech für einen Rotor eines Elektromotors, mit wenigstens zwei Magnettaschen zur Aufnahme eines jeweiligen Magneten nach der im Oberbegriff von Anspruch 1 näher definierten Art. Des Weiteren betrifft die Erfindung einen Rotor für einen Elektromotor sowie einen Elektromotor mit einem Stator und einem Rotor.

Aus der WO 2018/153700 A1 ist ein Rotorblech für einen Rotor eines Elektromotors bekannt. Dieser weist eine Magnettasche auf, die an ihrer dem äußeren Rand zugewandten Seite zwei Bereiche aufweist, die nicht durch den Rotormagneten ausgefüllt sind. Des Weiteren sind in einem dem äußeren Umfang des Rotorblechs abgewandten Bereich jeweilige Absätze gebildet, deren Abstand voneinander im Wesentlichen der Erstreckung des Rotormagneten in tangentialer Richtung entspricht und die zur Positionierung des Rotormagneten dienen.

Die DE 10 2010 022 702 A1 beschreibt einen Rotor mit Permanentmagneten, bei dem Klemmbleche vorgesehen sind, um die Magnete zu halten.

In der DE 10 2015 216 051 B4 ist ein Rotor für eine permanenterregte elektrische Maschine beschrieben, bei dem die Magnete in einer Haltetasche der Rotorbleche gehalten sind. Die Rotorbleche bilden radiale Biegeschenkel zum Halten der Permanentmagnete.

Bei der Lösung gemäß der DE 20 2004 016 534 U1 sind mehrere Permanentmagnete in jeweiligen Magnettaschen von Blechpaketen des Rotors aufgenommen. Die Magnettaschen weisen sich nach seitlich und oben erstreckende Hohlräume auf.

Ein grundsätzliches Problem bei der Konstruktion von solchen Rotorblechen besteht darin, dass die in den Magnettaschen aufgenommenen Magnete sich beim Betrieb des Elektromotors aufgrund der vorhandenen Maßabweichungen zwischen den Magnettaschen und den Magneten bewegen können, was Geräusche und Unsymmetrien im Magnetkreis verursacht. Des Weiteren sind die Magnettaschen häufig so ausgeführt, dass sie den Magnetfluss zwischen den einzelnen Magneten im Magnetkreis schwächen.

Es ist daher Aufgabe der vorliegenden Erfindung, ein Rotorblech für einen Rotor eines Elektromotors zu schaffen, bei dem die Magnete möglichst gut in ihrer Position fixiert sind und der magnetische Fluss an den Stellen, an denen er gewünscht ist, nicht behindert wird.

Erfindungsgemäß wird diese Aufgabe durch die in Anspruch 1 genannten Merkmale gelöst.

Das erfindungsgemäße Rotorblech weist an den dem äußeren Umfang des Rotorblechs zugewandten Seiten der Ausnehmungen jeweilige Anschlagelemente auf, die für eine exakte Positionierung der Magnete in den Magnettaschen sorgen. Dadurch behalten die Magnete auch während des Betriebs des Elektromotors, für den dieselben vorgesehen sind, ihre Position bei, so dass Laufgeräusche vermieden werden. Die Positionierung der Anschlagelemente im Bereich des Außenumfangs des Rotorblechs sorgt dafür, dass der magnetische Fluss nur in sehr geringem Maße geschwächt werden kann bzw. dass der magnetisch Fluss nicht über die Anschlagelemente unmittelbar zu dem benachbarten Magnet gelangen kann. Dadurch wird die eigentliche Wirkung der die Quererstreckung der Magnettaschen vergrößernden Ausnehmungen aufrechterhalten, nämlich ungewollte Kurzschluss-Magnetströmungen zu verhindern.

Des Weiteren sind auf der den Anschlagelementen gegenüberliegenden Seiten jeweilige die Fläche der Magnettaschen vergrößernde Aussparungen vorgesehen, sodass in dem Bereich, in dem zwei Magnete aneinander angrenzen, möglichst wenig Material des Rotorblechs vorhanden ist. Dadurch werden ebenfalls ungewollte Kurzschlüsse des Magnetflusses verhindert und der Magnetfluss kann sich in dem gewünschten Bereich einstellen. Dies erhöht letztendlich das Drehmoment und damit die Leistung des mit solchen Rotorblechen ausgestatteten Elektromotors sowie ganz allgemein die Ausnutzung der Maschine bzw. des Elektromotors.

Im Hinblick auf den vorhandenen Platz und die Verbesserung des Magnetflusses hat es sich als besonders vorteilhaft herausgestellt, wenn die Ausnehmungen eine im Wesentlichen dreieckige Grundfläche aufweisen.

Dasselbe gilt auch, wenn die Aussparungen eine im Wesentlichen dreieckige Grundfläche aufweisen.

Des Weiteren kann vorgesehen sein, dass eine dem äußeren Umfang des Rotorblechs abgewandten Spitze der dreieckigen Grundfläche der Aussparungen abgerundet ist. Auf diese Weise wird nicht nur die Fertigung des erfindungsgemäßen Rotorblechs vereinfacht, sondern es werden auch Störungen des Magnetflusses verhindert.

Die Homogenität des von den in dem erfindungsgemäßen Rotorblech aufgenommenen Magneten erzeugten Magnetfelds kann weiter verbessert werden, wenn eine gerade Außenkante der Aussparungen mit einer geraden Außenkante der zugeordneten Ausnehmungen fluchtet.

Des Weiteren kann vorgesehen sein, dass der Abstand der beiden Anschlagelemente in Richtung der Quererstreckung der Magnettaschen geringfügig größer ist als die Ausdehnung der Magnete in Richtung der Quererstreckung. Auf diese Weise wird die Montage der Magnete in den Magnettaschen erheblich erleichtert. Des Weiteren können durch diesen Abstand die sich bei der Fertigung der Magnete ergebenden Toleranzen besser berücksichtigt werden.

Hinsichtlich einer optimalen Leistungsausbeute des mit mehreren der erfindungsgemäßen Rotorbleche ausgestatteten Elektromotors hat es sich als besonders vorteilhaft erwiesen, wenn vier um jeweils 90 Grad versetzt zueinander angeordnete Magnettaschen vorgesehen sind.

Ein Rotor für einen Elektromotor mit mehreren erfindungsgemäßen Rotorblechen ist in Anspruch 8 angegeben.

Ein solcher Rotor lässt sich in Elektromotoren der unterschiedlichsten Bauarten einsetzen, wobei die mit demselben erreichbare Drehmoment- bzw. Leistungsausbeute besonders hervorzuheben ist.

In einer vorteilhaften Weiterbildung des Rotors kann vorgesehen sein, dass der nicht von den Magneten eingenommene Raum innerhalb der Magnettaschen mit einem Vergussmaterial vergossen ist. Dadurch wird eine noch weiter verbesserte Geräuschdämmung und Wärmeabfuhr beim Betrieb des Rotors erreicht.

In Anspruch 10 ist ein Elektromotor mit einem Stator und einem erfindungsgemäßen Rotor angegeben.

Ein derartiger Elektromotor kann die oben beschriebenen Vorteile des Rotorblechs und des damit ausgestatteten Rotors sehr gut nutzen, um eine möglichst hohe Leistung und einen hohen Wirkungsgrad zu erzielen.

Ergänzend sei darauf hingewiesen, dass Begriffe, wie "umfassend" "aufweisen" oder "mit" keine anderen Merkmale oder Schritte ausschließen. Ferner schließen Begriffe "ein" oder "das", die auf einer Einzahl von Schritten oder Merkmalen hinweisen, keine Mehrzahl von Merkmalen oder Schritten aus und umgekehrt.

Weitere Merkmale und Vorteile der Erfindung ergeben sich aus der nachfolgenden Beschreibung eines Ausführungsbeispiels der Erfindung. Die Figuren zeigen mehrere Merkmale der Erfindung in Kombination miteinander. Selbstverständlich vermag der Fachmann diese jedoch auch losgelöst voneinander zu betrachten und gegebenenfalls zu weiteren sinnvollen Unterkombinationen zu kombinieren, ohne dass hierfür erfinderisch tätig werden zu müssen.

Es zeigen schematisch:
- Figur 1: einen Schnitt durch einen erfindungsgemäßen Elektromotor mit einem Stator und einem Rotor;
- Figur 2: einen Schnitt nach der Linie II-II aus Fig. 1; und
- Figur 3: eine Vorderansicht eines erfindungsgemäßen Rotorblechs.

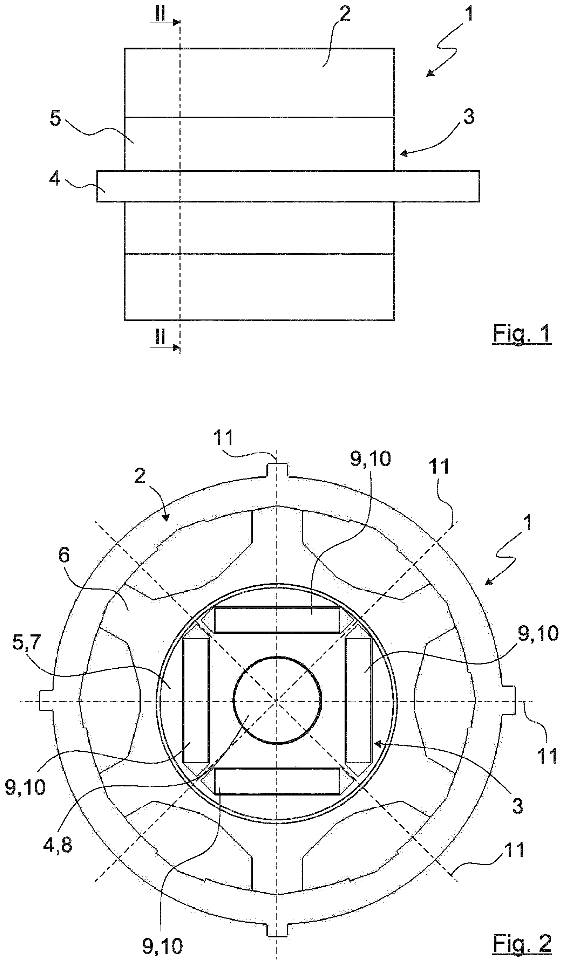

Figur 1 zeigt auf sehr schematische Art und Weise einen Elektromotor 1, der in an sich bekannter Weise einen Stator 2 und einen innerhalb des Stators 2 angeordneten Rotor 3 aufweist. Der Rotor 3 weist in ebenfalls an sich bekannter Weise eine Rotorwelle 4 und ein Rotorblechpaket 5 auf. Vorzugsweise handelt es sich bei dem Elektromotor 1 um einen Permanentmagnet erregten, wechselstrombetriebenen Elektromotor 1 bzw. einen Brushless-Motor. Allerdings kann es sich auch um einen mit Gleichstrom betriebenen Elektromotor 1 handeln.

Figur 2 zeigt einen Schnitt nach der Linie II-II aus Figur 1. Dabei sind ein Statorblech 6 und ein Rotorblech 7 dargestellt. Mehrere der Statorbleche 6 bilden zusammen mit einer nicht dargestellten Wicklung den Stator 2. In ähnlicher Weise bilden mehrere der Rotorbleche 7 das Rotorblechpaket 5. Zusammen mit der in einer zentralen Bohrung 8 des Rotorblechs 7 aufgenommenen Rotorwelle 4 und jeweiligen in Magnettaschen 9 des Rotorblechs 7 aufgenommenen Magneten 10 bilden die Rotorbleche 7 den Rotor 3.

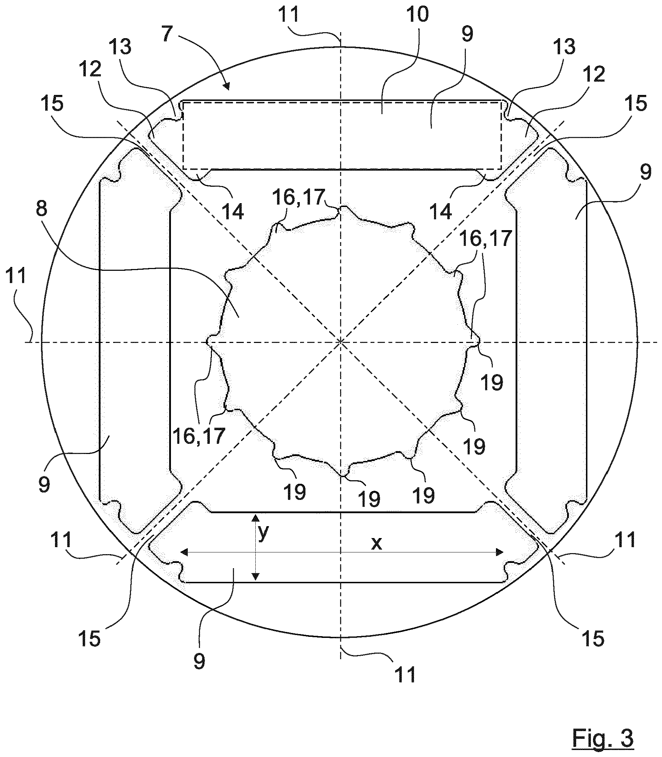

In Figur 3 ist eines der Rotorbleche 7 detailliert dargestellt. Es ist erkennbar, dass das Rotorblech 7 zumindest was den überwiegenden Teil seiner Merkmale anbelangt symmetrisch ausgebildet ist und mehrere in der Ebene, in der sich das Rotorblech 7 erstreckt, verlaufende Symmetrieachsen 11 aufweist. Des Weiteren ist erkennbar, dass das Rotorblech 7 vier um jeweils 90 Grad versetzt zueinander angeordnete Magnettaschen 9 aufweist. Grundsätzlich könnte auch eine andere Anzahl an Magnettaschen 9 vorgesehen sein, d.h. es könnte sich um eine andere mehrpolige Anordnung handeln, hinsichtlich einer optimalen Leistungsausbeute hat sich diese Anzahl an Magnettaschen 9 und darin angeordneten Magneten 10 als optimal erwiesen. Die exakte Auslegung der Anzahl und Anordnung der Magnettaschen 9 erfolgt im Allgemeinen in Abhängigkeit von der Drehzahlanforderung. Aus Gründen der Übersichtlichkeit ist in lediglich einer der Magnettaschen 9 einer der Magnete 10 mittels gestrichelter Linien angedeutet. Selbstverständlich sind bei dem Elektromotor 1 mit einem aus mehreren Rotorblechen 7 gebildeten Rotorblechpaket 5 in sämtlichen Magnettaschen 9 jeweilige Magnete 10 untergebracht. Die Magnete 10 sind jeweils abwechselnd mit ihrem Nordpol und mit ihrem Südpol nach außen gerichtet in den Magnettaschen 9 angeordnet.

Da, wie oben beschrieben, das Rotorblech 7 mehrere Symmetrieachsen 11 aufweist, sind sämtliche der Magnettaschen 9 im vorliegenden Fall identisch zueinander ausgebildet. Daher wird die spezifische Ausführung der Magnettaschen 9 nachfolgend lediglich in Bezug auf eine der Magnettaschen 9 beschrieben. Wiederum sind aus Gründen der Übersichtlichkeit nur bei einer der Magnettaschen 9 sämtliche Merkmale mittels Bezugszeichen bezeichnet.

Die Magnettasche 9 weist eine im Wesentlichen rechteckige Grundform mit einer im Wesentlichen senkrecht zu einer der Symmetrieachsen 11 des Rotorblechs 7 verlaufenden Quererstreckung x und einer in Richtung derselben Symmetrieachse 11 verlaufenden Höhenerstreckung y auf. Diese rechteckige Grundform der Magnettaschen 9 entspricht der rechteckigen Grundform der Magnete 10. Jedoch weist die Magnettasche 9 ihre Quererstreckung x beiderseits vergrößernde Ausnehmungen 12 auf, so dass seitlich der Magnete 10 freie Bereiche in den Magnettaschen 9 gebildet sind, die nicht von den Magneten 10 eingenommen werden. Die Ausnehmungen 12 bilden dabei eine Flusssperre. Die Ausnehmungen 12 weisen im vorliegenden Fall eine im Wesentlichen dreieckige Grundfläche auf, wobei die längste Seitenkante des Dreiecks an den Magnet 10 angrenzt.

In die Ausnehmungen 12 ragen beiderseits Anschlagelemente 13, die zur beiderseitigen Anlage des Magneten 10 dienen. Die Anschlagelemente 13 verkleinern damit die Fläche der Ausnehmungen 12 und somit die Fläche der Magnettasche 9. Es ist erkennbar, dass die Anschlagelemente 13 jeweils an den dem äußeren Umfang des Rotorblechs 7 zugewandten Seiten der Ausnehmungen 12 angeordnet sind. Mit anderen Worten, die Anschlagelemente 13 erstrecken sich von dem äußeren Umfang des Rotorblechs 7 nach innen, um so in die Ausnehmungen 12 hinein zu ragen.

Der Abstand der beiden Anschlagelemente 13 in Richtung der Quererstreckung x der Magnettaschen 9 ist geringfügig größer, beispielsweise 0,1 - 0,5 mm, insbesondere 0,2 - 0,4 mm, als die Ausdehnung der Magnete 10 in Richtung der Quererstreckung x, d. h. als die Breite der Magnete 10. Dies gewährleistet eine einfache Montage der Magnete 10 in den Magnettaschen 9.

Des Weiteren weist die Magnettasche 9 an ihrer dem äußeren Umfang des Rotorblechs 7 abgewandten Seite, also an der der Bohrung 8 für die Rotorwelle 4 zugewandten Seite, jeweilige an die Ausnehmungen 12 angrenzende, die Fläche der Magnettaschen 9 vergrößernde Aussparungen 14 auf. Es ist erkennbar, dass die Aussparungen 14, ähnlich wie die Ausnehmungen 12, zu einer zusätzlichen Abweichung der Fläche der Magnettasche 9 von der grundsätzlich rechteckigen Grundfläche beitragen. Die Magnete 10 erstrecken sich somit nicht in die Aussparungen 14.

Die Aussparungen 14 verkleinern die Fläche des Rotorblechs 7 in dem Bereich eines sich zwischen zwei benachbarten Magneten 10 befindenden Stegs 15 und sorgen so für den gewünschten Verlauf des Magnetflusses. Des Weiteren werden Kurschlussströmungen von gleichen Polen der Magnete 10 verhindert. Die von den Ausnehmungen 12 gebildete Flusssperre wird durch die Aussparungen 14 vergrößert bzw. verstärkt.

Die Aussparungen 14 weisen im vorliegenden Fall eine im Wesentlichen dreieckige Grundfläche auf, wobei eine dem äußeren Umfang des Rotorblechs 7 abgewandte Spitze der dreieckigen Grundfläche der Aussparung 14 abgerundet ist. Des Weiteren ist erkennbar, dass eine gerade Außenkante der Aussparung 14 mit einer geraden Außenkante der der Aussparung 14 zugeordneten Ausnehmung 12 fluchtet, d. h. dass die Aussparung 14 in diesem Bereich die Ausnehmung 12 fortsetzt.

Dabei können die Anschlagelemente 13 sich so weit in die Ausnehmung 12 hinein erstrecken, dass der Magnet 10 in dem Bereich, in dem die gerade Außenkante der Ausnehmung 12 in die gerade Außenkante der Aussparung 14 übergeht, anliegt.

Der nicht von dem Magnet 10 eingenommen Raum innerhalb der Magnettasche 9, insbesondere also der Bereich der beidseitigen Ausnehmungen 12 und der beidseitigen Aussparungen 14, kann mit einem nicht dargestellten Vergussmaterial vergossen sein, so dass die Magnete 10 sicher in dem durch die Rotorbleche 7 gebildeten Rotorblechpaket 5 gehalten sind.

Die Größe der Ausnehmungen 12 und der Aussparungen 14 hängt unter anderem von der Größe und der geometrischen Form der Magnettasche 9 sowie von der gewünschten Wirkung der dadurch gebildeten Flusssperren ab.

In Figur 3 ist außerdem zu erkennen, dass die Bohrung 8 des Rotorblechs 7 an ihrem Umfang mehrere Ausnehmungen 16 aufweist, die die Fläche der Bohrung 8 vergrößern und die zum Eingreifen von Vorsprüngen 17 der Rotorwelle 4 dienen. Dabei ist die Form der Vorsprünge 17 der Rotorwelle 4 an die nachfolgend ausführlich beschriebene Form der Ausnehmungen 16 der Bohrung 8 angepasst. Zwischen der Rotorwelle 4 und dem Rotorblechpaket 5 ist im vorliegenden Fall ein Isoliermaterial 18 angeordnet.

Die Ausnehmungen 16 sind hügelartig ausgebildet und weisen an ihrer von der Mitte der Bohrung 8 entferntesten Stelle einen Radius 19 auf. Die Übergänge von dem Radius 19 zu dem Umfang der Bohrung 8 weisen auf beiden Seiten der Ausnehmung 16 unterschiedliche Steigungen auf. Beispielsweise kann wenigstens einer der Übergänge von dem Radius 19 zu dem Umfang der Bohrung 8 mittels eines Radius gebildet sein. Alternativ oder zusätzlich kann wenigstens einer der Übergänge von dem Radius 19 zu dem Umfang der Bohrung 8 mittels einer Geraden gebildet sein. Selbstverständlich ist es auch möglich, dass einer der Übergänge von dem Radius 19 zu dem Umfang der Bohrung 8 mittels eines Radius und der andere Übergang mittels einer Geraden gebildet ist.

Im dargestellten Ausführungsbeispiel weisen einige der Ausnehmungen 16 im Uhrzeigersinn betrachtet auf ihrer linken Seite eine größere Steigung auf als auf ihrer rechten Seite, wohingegen einige der Ausnehmungen 16 im Uhrzeigersinn betrachtet auf ihrer rechten Seite eine größere Steigung aufweisen, als auf ihrer linken Seite. Dabei sind die unterschiedlichen Ausnehmungen jeweils spiegelbildlich zueinander, d.h. es existieren nur zwei unterschiedliche Formen der Ausnehmungen 16.

Besonders zu bevorzugen ist es, dass die Form und die Anordnung der Ausnehmungen 16 derart erfolgt, dass diese punktsymmetrisch zur Mitte der Bohrung 8 ist. Unter anderem weist die Bohrung 8 in diesem Zusammenhang eine geradzahlige Anzahl an Ausnehmungen 16 auf. Des Weiteren sind die Ausnehmungen 16, die im Uhrzeigersinn betrachtet auf der linken Seite eine größere Steigung aufweisen als auf der rechten Seite und die Ausnehmungen 16, die im Uhrzeigersinn betrachtet auf der rechten Seite eine größere Steigung aufweisen als auf der linken Seite, einander abwechselnd vorgesehen. Die Ausnehmungen 16 weisen dabei jeweils einen gleichen Abstand voneinander auf. Da es sich im vorliegenden Fall um insgesamt 12 Ausnehmungen 16 handelt, sind diese jeweils um einen Winkel von 30 Grad zueinander versetzt angeordnet. Dabei sind die einzelnen Ausnehmungen 16 selbstverständlich nicht symmetrisch, sondern weisen, wie oben erläutert, auf ihren beiden Seiten unterschiedliche Steigungen auf.

## Patentansprüche

1. Rotorblech (7) für einen Rotor (3) eines Elektromotors (1), mit wenigstens zwei Magnettaschen (9) zur Aufnahme eines jeweiligen Magneten (10), wobei die Magnettaschen (9) jeweils eine im Wesentlichen senkrecht zu einer Symmetrieachse (11) des Rotorblechs (7) verlaufende Quererstreckung (x) und eine in Richtung der Symmetrieachse (11) verlaufende Höhenerstreckung (y) aufweist, wobei die Magnettaschen (9) jeweilige ihre Quererstreckung (x) beiderseits vergrößernde Ausnehmungen (12) und jeweilige in die Ausnehmungen (12) ragende, zur beiderseitigen Anlage des Magneten (10) dienende Anschlagelemente (13) aufweisen,
**dadurch gekennzeichnet, dass** die Anschlagelemente (13) jeweils an den dem äußeren Umfang des Rotorblechs (7) zugewandten Seiten der Ausnehmungen (12) angeordnet sind, und dass die Magnettaschen (9) an ihren dem äußeren Umfang des Rotorblechs (7) abgewandten Seiten jeweilige an die Ausnehmungen (12) angrenzende, die Fläche der Magnettaschen (9) vergrößernde Aussparungen (14) aufweisen.

2. Rotorblech nach Anspruch 1,
**dadurch gekennzeichnet, dass** die Ausnehmungen (12) eine im Wesentlichen dreieckige Grundfläche aufweisen.

3. Rotorblech nach Anspruch 1 oder 2,
**dadurch gekennzeichnet, dass** die Aussparungen (14) eine im Wesentlichen dreieckige Grundfläche aufweisen.

4. Rotorblech nach Anspruch 3,
**dadurch gekennzeichnet, dass** eine dem äußeren Umfang des Rotorblechs (7) abgewandten Spitze der dreieckigen Grundfläche der Aussparungen (14) abgerundet ist.

5. Rotorblech nach Anspruch 3 oder 4,
**dadurch gekennzeichnet, dass** eine gerade Außenkante der Aussparungen (14) mit einer geraden Außenkante der zugeordneten Ausnehmungen (12) fluchtet.

6. Rotorblech nach einem der Ansprüche 1 bis 5,
**dadurch gekennzeichnet, dass** der Abstand der beiden Anschlagelemente (13) in Richtung der Quererstreckung (x) der Magnettaschen (9) geringfügig größer ist als die Ausdehnung der Magnete (10) in Richtung der Quererstreckung (x).

7. Rotorblech nach einem der Ansprüche 1 bis 6,
**dadurch gekennzeichnet, dass** vier um jeweils 90 Grad versetzt zueinander angeordnete Magnettaschen (9) vorgesehen sind.

8. Rotor (3) für einen Elektromotor (1) mit einer Rotorwelle (4) und mit einem Rotorblechpaket (5), das eine Bohrung (8) zur Aufnahme der Rotorwelle (4) aufweist, wobei das Rotorblechpaket (5) wenigstens ein Rotorblech (7) nach einem der Ansprüche 1 bis 7 aufweist, und wobei in den wenigstens zwei Magnettaschen (9) des Rotorblechs (7) jeweilige Magnete (10) aufgenommen sind.

9. Rotor nach Anspruch 8,
**dadurch gekennzeichnet, dass** der nicht von den Magneten (10) eingenommene Raum innerhalb der Magnettaschen (9) mit einem Vergussmaterial vergossen ist.

10. Elektromotor (1) mit einem Stator (2) und mit einem Rotor (3) nach Anspruch 8 oder 9.
